# FASCICULE DE BREVET EUROPEEN

(11) **EP 0 911 380 B1**
(45) Date de publication et mention de la délivrance du brevet: **16.04.2003**
(21) Numéro de dépôt: 98402523.9
(22) Date de dépôt: 12.10.1998
(51) Int. Cl.: C10G 45/64, B01J 29/44

(54) **Procédé pour l'amélioration du point d'écoulement de charges paraffiniques avec un catalyseur à base de zéolithe IM-5**
Verfahren zur Verbesserung des Stockpunktes von paraffinischen Einsätzen mit Katalysatoren auf der Basis von Zeolith IM-5
Process for improving the pour point of paraffinic feedstocks with zeolite IM-5 based catalysts

(30) Priorité: 16.10.1997 FR 9712944
(43) Date de publication de la demande: 28.04.1999
(73) Titulaire: INSTITUT FRANCAIS DU PETROLE, 92500 Rueil Malmaison (FR)
(72) Inventeur: Benazzi, Eric, 78400 Chatou (FR); George-Marchal, Nathalie, 69230 Saint Genis Laval (FR); Gueret, Christophe, 69560 St. Romain en Gal (FR); Briot, Patrick, 38260 Pommier de Beaurepaire (FR); Billon, Alain, 78110 Le Vesinet (FR); Marion, Pierre, 75013 Paris (FR)

(56) Documents cités:
- EP-A- 0 135 658
- FR-A- 2 754 809
- US-A- 4 474 618

## Description

La présente invention concerne un procédé pour améliorer le point d'écoulement de charges contenant des paraffines, linéaires et/ou peu ramifiées, longues (plus de 10 atomes de carbone), en particulier pour convertir, avec un bon rendement, des charges possédant des points d'écoulement élevés en au moins une coupe présentant un point d'écoulement bas et un haut indice de viscosité.

### Art antérieur

Les lubrifiants de haute qualité sont d'une importance primordiale pour le bon fonctionnement des machines modernes, des automobiles, et des camions. Cependant, la quantité de paraffines issues directement du pétrole, non traitées, et possédant les propriétés adéquates pour constituer des bons lubrifiants est très faible par rapport à la demande croissante dans ce secteur.

Le traitement des fractions pétrolières lourdes à fortes teneurs en paraffines linéaires ou peu ramifiées est nécessaire afin d'obtenir des huiles de base de bonne qualité et ce avec les meilleurs rendements possibles, par une opération qui vise à éliminer les paraffines linéaires ou très peu branchées, des charges qui seront ensuite utilisées en tant que huiles de base ou en tant que kérosène ou carburéacteur (jet fuel).

En effet, les paraffines de haut poids moléculaire qui sont linéaires ou très faiblement branchées et qui sont présentes dans les huiles ou dans le kérosène ou carburéacteur conduisent à des points d'écoulement hauts et donc à des phénomènes de figeage pour des utilisations à basse température. Afin de diminuer les valeurs des points d'écoulement, ces paraffines linéaires pas ou très peu branchées doivent être entièrement ou partiellement éliminées.

Cette opération peut s'effectuer par extraction par des solvants tels que le propane ou la méthyl-éthyl cétone, on parle alors de déparaffinage au propane ou à la méthyl éthyl-cétone (MEK). Cependant, ces techniques sont coûteuses, longues et pas toujours aisées à mettre en oeuvre.

Un autre moyen est le traitement catalytique et, compte tenu de leur sélectivité de forme, les zéolithes sont parmi les catalyseurs les plus utilisés.

Des catalyseurs à base de zéolithes telles que les ZSM-5, ZSM-11, ZSM-12, ZSM22, ZSM-23, ZSM-35 et ZSM-38 ont été décrits pour leur utilisation dans ces procédés.

La demanderesse a porté ses efforts de recherche sur la mise au point de catalyseurs pour l'amélioration du point d'écoulement des charges.

### Objet de l'invention

L'invention a pour objet un procédé pour l'amélioration du point d'écoulement d'une charge paraffinique comportant des paraffines de plus de 10 atomes de carbone, dans lequel la charge à traiter est mise au contact d'un catalyseur à base de zéolithe IM-5 et comprenant au moins un élément hydro-déshydrogénant, à une température comprise entre 170 et 500°C, une pression entre 1 et 250 bar et une vitesse volumique horaire entre 0,05 et 100 h⁻¹, en présence d'hydrogène à raison de 50 à 2000 I/I de charge.

La zéolithe IM-5, sous forme hydrogène, désignée par H-IM-5 et obtenue par calcination et/ou échanges ioniques de la zéolithe IM-5 brute de synthèse, employée dans le procédé selon l'invention ainsi que son mode de synthèse sont décrits dans la demande internationale de brevet WO 98 17581 du 17 octobre 1997. Cette demande divulgue l'utilisation d'un catalyseur comprenant la zéolithe IM-S et un composant d'hydrogénation/déshydrogénation dans des conditions adaptées aux procédés d' hydrogénation et/ou de déshydrogénation.

La structure zéolithique, nommée IM-5, a une composition chimique, exprimée sur une base anhydre, en termes de rapports molaires d'oxydes, par la formule :

100 XO₂, m Y₂O₃, p R_{2/n}O,

où m est égal ou inférieur à 10,
p est compris entre 0 (exclu) et 20,
R représente un ou plusieurs cations de valence n,
X est le silicium et/ou le germanium, de préférence le silicium,
Y est choisi dans le groupe formé par les éléments suivants : l'aluminium, le fer, le gallium, le bore, le titane, de préférence Y est l'aluminium, et caractérisée par le fait qu'elle présente, sous forme brute de synthèse, un diagramme de diffraction X comportant les raies présentées dans le tableau 1.

**Tableau 1 :**

| Tableau de diffraction des rayons X de la zéolithe IM-5 brute de synthèse | |
|---|---|
| dₕₖₗ (Å) | I/Iₘₐₓ |
| 11,8±0,35 | F à TF(1) |
| 11,5±0,30 | F à TF(1) |
| 11,25±0,30 | F à TF(1) |
| 9,95±0,20 | m à F |
| 9,50±0,15 | m à F |
| 7,08±0,12 | f à m |
| 6,04±0,10 | tf à f |
| 5,75±0,10 | f |
| 5,65±0,10 | f |
| 5,50±0,10 | tf |
| 5,35±0,10 | tf |
| 5,03±0,09 | tf |
| 4,72±0,08 | f à m |
| 4,55±0,07 | f |
| 4,26±0,07 | tf |
| 3,92±0,07 | F à TF(2) |
| 3,94±0,07 | TF(2) |
| 3,85±0,05 | TF(2) |
| 3,78±0,04 | F à TF(2) |
| 3,67±0,04 | m à F |
| 3,55±0,03 | m à F |
| 3,37±0,02 | f |
| 3,30±0,015 | f |
| 3,099±0,012 | f à m |
| 2,970±0,007 | tf à f |
| 2,815±0,005 | tf |
| 2,720±0,005 | tf |

| | |
|---|---|
| (1) Raies faisant partie du même massif, | |
| (2) Raies faisant partie du même massif. | |

La zéolithe IM-5 dans sa forme hydrogène, désignée H-IM-5, obtenue par calcination(s) et/ou échange(s) ionique(s), comme explicité ci-après, présente un diagramme de diffraction des rayons X comportant les raies présentées dans le tableau 2. Tableau 2 :

| Tableau de diffraction des rayons X de la zéolithe IM-5 sous forme H, H-IM-5 obtenue par calcination | |
|---|---|
| dₕₖₗ (Å) | I/Iₘₐₓ |
| 11,8±0,30 | F à TF(1) |
| 11,45±0,25 | TF(1) |
| 11,20±0,20 | F à TF(1) |
| 9,90±0,15 | m à F |
| 9,50±0,15 | m à F |
| 7,06±0,12 | f à m |
| 6,01±0,10 | tf à f |
| 5,70±0,10 | f |
| 5,30±0,10 | tf |
| 5,03±0,09 | tf |
| 4.71±0,08 | f |
| 4,25±0,07 | tf |
| 3,87±0.07 | m à F (2) |
| 3,81±0,05 | m à F (2) |
| 3,76±0,04 | m à F (2) |
| 3,67±0,04 | f à m |
| 3,54±0,04 | m à F |
| 3,37±0,03 | f |
| 3,316±0,015 | f |
| 3,103±0,012 | f |
| 3,080±0,010 | f à m |
| 2,950±0,010 | tf à f |
| 2,880±0,007 | tf |
| 2,790±0,005 | tf |
| 2,590±0,005 | tf |

| | |
|---|---|
| (1) Raies faisant partie du même massif, | |
| (2) Raies faisant partie du même massif. | |

Ces diagrammes sont obtenus à l'aide d'un diffractomètre en utilisant la méthode classique des poudres avec le rayonnement Kα du cuivre. A partir de la position des pics de diffraction représentée par l'angle 2θ, on calcule, par la relation de Bragg, les équidistances réticulaires dₕₖₗ caractéristiques de l'échantillon. Le calcul de l'intensité se fait sur la base d'une échelle d'intensité relative sur laquelle on attribue une valeur de 100 à la raie présentant l'intensité la plus forte sur le diagramme de diffraction X :
très faible (tf) signifie inférieure à 10,
faible (f) signifie inférieure à 20,
moyenne (m) signifie comprise entre 20 et 40,
forte (F) signifie comprise entre 40 et 60,
très forte (TF) signifie supérieure à 60.

Les diffractogrammes X à partir desquels ces données ont été obtenues (espacement d et intensités relatives) sont caractérisés par de larges réflexions avec de nombreux pics formant des épaulements sur d'autres pics d'intensité supérieure. Il peut arriver que certains épaulements, ou tous les épaulements, ne soient pas résolus. Ceci peut se produire pour des échantillons faiblement cristallins ou des échantillons au sein desquels les cristaux sont suffisamment petits pour donner un élargissement significatif des rayons X. Cela peut également être le cas lorsque l'équipement ou les conditions mis en oeuvre pour obtenir le diagramme diffèrent de ceux utilisés ici.

On estime que la zéolithe IM-5 possède une nouvelle structure de base ou topologie qui est caractérisée par son diagramme de diffraction X. La zéolithe IM-5 sous sa "forme brute de synthèse" possède sensiblement les caractéristiques obtenues par diffraction X à celles présentées dans le tableau 1 et se distingue ainsi des zéolithes connues. L'objet de l'invention comprend aussi toute zéolithe de même type structural que celui de la zéolithe IM-5.

On comprendra également dans ce texte par "zéolithe IM-5" les zéolithes IM-5 comprenant du silicium et au moins un élément T choisi dans le groupe formé par Al, Fe, Ga, B, Ti, Zr.

Avantageusement ce procédé permet de convertir une charge possédant un haut point d'écoulement en un mélange (huile) possédant un point d'écoulement plus bas et un haut indice de viscosité. Il est également applicable pour la réduction du point d'écoulement des gazoles par exemple.
La charge est composée, entre autre, de paraffines linéaires et/ou peu ramifiées comportant au moins 10 atomes de carbone, de préférence de 15 à 50 atomes de carbone et avantageusement de 15 à 40 atomes de carbone.

Le catalyseur comporte au moins une fonction hydro-déshydrogénante, par exemple un métal du groupe VIII ou une combinaison d'au moins un métal ou composé du groupe VIII et d'au moins un métal ou composé du groupe VI, et la réaction est réalisée dans les conditions décrites ci-après.

L'utilisation de zéolithe IM-5 selon l'invention dans les conditions décrites ci-dessus permet, notamment, la production de produits à faible point d'écoulement et haut indice de viscosité avec de bons rendements.

### Description détaillée de l'invention

La zéolithe IM-5 présente un rapport atomique Si/T compris entre 5 et 600 et en particulier entre 10 et 300.

Le rapport Si/T global de la zéolithe ainsi que la composition chimique des échantillons sont déterminés par fluorescence X et absorption atomique

La zéolithe IM-5 selon l'invention peut être obtenue avec le rapport Si/T désiré, pour l'application catalytique selon l'invention, directement à la synthèse en ajustant les conditions opératoires de synthèse. Puis la zéolithe est calcinée et échangée par au moins un traitement par une solution d'au moins un sel d'ammonium de manière à obtenir la forme ammonium de la zéolithe qui une fois calcinée conduit à la forme hydrogène de la zéolithe.

Dans d'autres cas, il est éventuellement possible que la zéolithe IM-5 subisse un traitement de désalumination ayant pour but d'augmenter un rapport Si/Al bas obtenu à la synthèse, ou tout traitement permettant d'ôter une partie au moins d'élément T contenu dans la zéolite IM-5, T étant Al, Fe, Ga, B, Ti, Zr.

Pour préparer la zéolithe IM-5 désaluminée selon l'invention, dans le cas préféré où T est Al, deux méthodes de désalumination peuvent être employées, à partir de la zéolithe IM-5 brute de synthèse comprenant du structurant organique. Elles sont décrites ci-après. Mais toute autre méthode connue de l'homme du métier entre aussi dans le cadre de l'invention.

La première méthode dite de l'attaque acide directe comprend une première étape de calcination sous flux d'air sec, à une température généralement comprise entre environ 450 et 550°C, qui a pour but d'éliminer le structurant organique présent dans la microporosité de la zéolithe, suivie d'une étape de traitement par une solution aqueuse d'un acide minéral tel que HNO₃ ou HCl ou organique tel que CH₃CO₂H. Cette dernière étape peut être répétée autant de fois qu'il est nécessaire afin d'obtenir le niveau de désalumination voulue. Entre ces deux étapes il est possible de réaliser un ou plusieurs échanges ioniques par au moins une solution NH₄NO₃, de manière à éliminer au moins en partie, de préférence pratiquement totalement, le cation alcalin, en particulier le sodium. De même, à la fin du traitement de désalumination par attaque acide directe, il est possible de réaliser un ou plusieurs échanges ioniques par au moins une solution NH₄NO₃, de manière à éliminer les cations alcalins résiduels et en particulier le sodium.

Pour atteindre le rapport Si/Al désiré, il est nécessaire de bien choisir les conditions opératoires ; de ce point de vue les paramètres les plus critiques sont la température du traitement par la solution aqueuse d'acide, la concentration de ce dernier, sa nature, le rapport entre la quantité de solution acide et la masse de zéolithe traitée, la durée du traitement et le nombre de traitement réalisés.

La deuxième méthode dite de traitement thermique (en particulier à la vapeur d'eau ou "steaming") + attaque acide, comprend, dans un premier temps, la calcination sous flux d'air sec, à une température généralement comprise entre environ 450 et 550°C, qui a pour but d'éliminer le structurant organique occlus dans la microporosité de la zéolithe. Puis le solide ainsi obtenu est soumis à un ou plusieurs échanges ioniques par au moins une solution NH₄NO₃, de manière à éliminer au moins en partie, de préférence pratiquement totalement, le cation alcalin, en particulier le sodium, présent en position cationique dans la zéolithe. La zéolithe ainsi obtenue est soumise à au moins un cycle de désalumination de charpente, comportant au moins un traitement thermique réalisé, éventuellement et de préférence en présence de vapeur d'eau, à une température généralement comprise entre 500 et 900°C, et éventuellement suivie d'au moins une attaque acide par une solution aqueuse d'un acide minéral ou organique. Les conditions de calcination en présence de vapeur d'eau (température, pression de vapeur d'eau et durée du traitement) ainsi que les conditions d'attaque acide post-calcination (durée de l'attaque, concentration de l'acide, nature de l'acide utilisé et le rapport entre le volume d'acide et la masse de zéolithe), sont adaptées de manière à obtenir le niveau de désalumination souhaité. Dans le même but on peut aussi jouer sur le nombre de cycles traitement thermique-attaque acide qui sont effectués.

Dans le cas préféré où T est Al, le cycle de désalumination de la charpente, comportant au moins une étape de traitement thermique, réalisé éventuellement et de préférence en présence de vapeur d'eau, et au moins une étape d'attaque en milieu acide de la zéolithe IM-5, peut être répété autant de fois qu'il est nécessaire pour obtenir la zéolithe IM-5 désaluminée possédant les caractéristiques désirées. De même, suite au traitement thermique, réalisé éventuellement et de préférence en présence de vapeur d'eau, plusieurs attaques acides successives, avec des solutions en acide de concentrations différentes, peuvent être opérées.

Une variante de cette deuxième méthode de calcination peut consister à réaliser le traitement thermique de la zéolithe IM-5 contenant le structurant organique, à une température généralement comprise entre 500 et 850°C, éventuellement et de préférence en présence de vapeur d'eau. Dans ce cas les étapes de calcination du structurant organique et de désalumination de la charpente sont réalisées simultanément. Puis, la zéolithe est éventuellement traitée par au moins une solution aqueuse d'un acide minéral (par exemple de HNO3 ou de HCl) ou organique(CH₃CO₂H par exemple). Enfin, le solide ainsi obtenu peut être éventuellement soumis à au moins un échange ionique par au moins une solution NH₄NO₃, de manière à éliminer pratiquement tout cation alcalin, en particulier le sodium, présent en position cationique dans la zéolithe.

La zéolithe IM-5 selon l'invention est au moins en partie, de préférence pratiquement totalement, sous forme acide, c'est-à-dire sous forme hydrogène (H+). Le rapport atomique Na/T est généralement inférieur à 10% et de préférence inférieur à 5% et de manière encore plus préférée inférieur à 1%.

Le tamis (zéolithe IM-5) contient généralement au moins un élément hydro-déshydrogénant, par exemple au moins un métal du groupe VIII, de préférence un métal noble et avantageusement choisi dans le groupe formé par le Pt ou le Pd, qui est introduit dans le tamis moléculaire par exemple par imprégnation à sec, par échange ionique ou toute autre méthode connue de l'homme du métier.

La teneur en métal ainsi introduit, exprimée en % poids par rapport à la masse de tamis moléculaire engagée, est généralement inférieure à 5 %, de préférence inférieure à 3 % et généralement de l'ordre de 0,5 % à 1 % poids.

Dans le cas du traitement d'une charge réelle le tamis moléculaire selon l'invention est préalablement mis en forme. Selon une première variante, le tamis moléculaire peut être soumis au dépôt d'au moins un métal du groupe VIII de préférence choisi dans le groupe formé par le platine et le palladium, et mis en forme par toute technique connue de l'homme du métier. Il peut en particulier être mélangé à une matrice, généralement amorphe, par exemple à une poudre humide de gel d'alumine. Le mélange est ensuite mis en forme, par exemple par extrusion au travers d'une filière. La teneur en tamis moléculaire du mélange ainsi obtenu est généralement comprise entre 0,5 et 99,9 % et avantageusement comprise entre 5 et 90 % en poids par rapport au mélange (tamis moléculaire + matrice).

Dans la suite du texte on désignera par le terme support le mélange tamis moléculaire + matrice.

La mise en forme peut être réalisée avec d'autres matrices que l'alumine, telles que par exemple la magnésie, les silice-alumines amorphes, les argiles naturelles (kaolin, bentonite, sepiolite, attapulgite), la silice, l'oxyde de titane, l'oxyde de bore, la zircone, les phosphates d'aluminium, les phosphates de titane, les phosphates de zirconium, le charbon et leurs mélanges. D'autres techniques que l'extrusion, telles que le pastillage ou la dragéification, peuvent être utilisées.

Le métal hydrogénant du groupe VIII, de préférence Pt et/ou Pd, peut également être déposé sur le support par tout procédé connu de l'homme de l'art et permettant le dépôt du métal sur le tamis moléculaire. On peut utiliser la technique d'échange cationique avec compétition où le compétiteur est de préférence le nitrate d'ammonium, le rapport de compétition étant au moins égal à environ 20 et avantageusement d'environ 30 à 200. Dans le cas du platine ou du palladium, on utilise habituellement un complexe tétramine du platine ou un complexe tétramine du palladium : ces derniers se déposeront alors pratiquement en totalité sur le tamis moléculaire. Cette technique d'échange cationique peut également être utilisée pour déposer directement le métal sur la poudre de tamis moléculaire, avant son mélange éventuel avec une matrice.
Le dépôt du métal (ou des métaux) du groupe VIII est suivi en général d'une calcination sous air ou oxygène, usuellement entre 300 et 600°C durant 0,5 à 10 heures, de préférence entre 350°C et 550°C durant 1 à 4 heures. On peut procéder ensuite à une réduction sous hydrogène, généralement à une température comprise entre 300 et 600°C pendant 1 à 10 heures, de préférence on opérera entre 350° et 550°C pendant 2 à 5 heures.

On peut également déposer le platine et/ou le palladium non plus directement sur le tamis moléculaire, mais sur la matrice (le liant aluminique), avant ou après l'étape de mise en forme, en mettant en oeuvre un échange anionique avec de l'acide hexachloroplatinique, de l'acide hexachloropalladique et/ou du chlorure de palladium en présence d'un agent compétiteur, par exemple l'acide chlorhydrique. En général après le dépôt de platine et/ou de palladium, le catalyseur est comme précédemment soumis à une calcination puis réduit sous hydrogène comme indiqué ci-dessus.

L'élément hydro-déshydrogénant peut également être une combinaison d'au moins un métal ou composé du groupe VI (par exemple le molybdène ou le tungstène) et d'au moins un métal ou composé du groupe VIII (par exemple le nickel ou le cobalt). La concentration totale en métaux des groupes VI et VIII, exprimée en oxydes de métaux par rapport au support, est généralement comprise entre 5 et 40 % poids, de préférence entre 7 et 30 % poids. Le rapport pondéral (exprimé en oxydes métalliques) métaux du groupe VIII sur métaux du groupe VI est de préférence compris entre 0,05 et 0,8; de préférence entre 0,13 et 0,5.

Les méthodes de préparation précédentes sont utilisables pour déposer ces métaux.

Ce type de catalyseur peut avantageusement contenir du phosphore, dont la teneur, exprimée en oxyde de phosphore P₂O₅ par rapport au support, sera généralement inférieure à 15 % poids, de préférence inférieure à 10 % poids.

Les charges qui peuvent être traitées selon le procédé de l'invention sont avantageusement des fractions possédant des points d'écoulement relativement hauts dont on désire diminuer la valeur.

Le procédé selon l'invention peut être utilisé pour traiter des charges variées allant de fractions relativement légères telles que les kérosènes et carburéacteurs jusqu'à des charges possédant des points d'ébullition plus élevés telles que les distillats moyens, les résidus sous vide, les gazoles, les distillats moyens issus du FCC (LCO et HCO) et les résidus d'hydrocraquage, ou encore des cires, telles que les « slack wax »qui sont des résidus d'hydrocraquage déparaffinés.

La charge à traiter est dans la majeure partie des cas une coupe C₁₀⁺ de point d'ébullition initial supérieur à environ 175 °C, de préférence une coupe lourde à point d'ébullition d'au moins 280°C et avantageusement à point d'ébullition d'au moins 380°C. Le procédé selon l'invention est particulièrement adapté pour traiter des distillats paraffiniques tels que les distillats moyens qui englobent les gazoles, les kérosènes, les carburéacteurs, les distillats sous vide et toutes autres fractions dont le point d'écoulement et la viscosité doivent être adaptés pour rentrer dans le cadre des spécifications.

Les charges qui peuvent être traitées selon le procédé de l'invention peuvent contenir des paraffines, des oléfines, des naphtènes, des aromatiques et aussi des hétérocycles et avec une proportion importante de n-paraffines de haut poids moléculaire et de paraffines très peu branchées également de haut poids moléculaire.

Des charges typiques qui peuvent être traitées avantageusement selon l'invention possèdent en général un point d'écoulement au dessus de 0°C. Les produits résultant du traitement selon le procédé ont des points d'écoulement inférieurs à 0°C et de préférence inférieurs à environ -10°C.

Ces charges peuvent présenter des teneurs en n-paraffines à plus de 10 atomes de carbone de haut poids moléculaire, et de paraffines à plus de 10 atomes de carbone très peu branchées également de haut poids moléculaire, supérieures à 30 % et jusqu'à environ 90 %, voire dans certains cas supérieures à 90 % poids. Le procédé est particulièrement intéressant lorsque cette proportion est d'au moins 60 % poids.

On peut citer comme exemples d'autres charges traitables selon l'invention et à titre non limitatif, les bases pour huiles lubrifiantes, les paraffines de synthèse issues du procédé Fischer-Tropsch, les polyalphaoléfines à haut point d'écoulement, les huiles de synthèse etc... Le procédé peut également s'appliquer à d'autres composés contenant une chaîne n-alcane tels que définis précédemment, par exemple des composés n-alkylcycloalcanes, ou comportant au moins un groupe aromatique.

Les conditions opératoires dans lesquelles s'opère le procédé de l'invention sont les suivantes:
- la température de réaction est comprise entre 170 et 500°C et de préférence entre 180 et 470°C, avantageusement 190-450°C ;
- la pression est comprise entre 1 et 250 bar et de préférence entre 10 et 200 bar;
- la vitesse volumique horaire (vvh exprimée en volume de charge injectée par unité de volume de catalyseur et par heure) est comprise entre environ 0,05 et environ 100 et de préférence entre environ 0,1 et environ 30 h⁻¹.

Le contact entre la charge et le catalyseur est réalisé en présence d'hydrogène. Le taux d'hydrogène utilisé et exprimé en litres d'hydrogène par litre de charge est compris entre 50 et environ 2000 litres d'hydrogène par litre de charge et de préférence entre 100 et 1500 litres d'hydrogène par litre de charge.

La charge à traiter possède de préférence une teneur en composés azotés inférieure à environ 200 ppm poids et de préférence inférieure à 100 ppm poids. La teneur en soufre est inférieure à 1000 ppm poids, de préférence inférieure à 500 ppm et de manière encore plus préférée inférieure à 200 ppm poids. La teneur en métaux de la charge, tels que Ni ou V, est extrêmement réduite, c'est-à-dire inférieure à 50 ppm poids, de manière préférée inférieure à 10 ppm poids et de manière encore plus préférée inférieure à 2 ppm poids.

Les exemples qui suivent illustrent l'invention sans toutefois en limiter la portée.

**Exemple 1 :** Synthèse de zéolithe IM-5 avec le pentane-1,5-bis(méthylpyrrolidinium) bromure (PentPyrr). La structure du pentane-1,5-bis(méthylpyrrolidinium) bromure est la suivante :

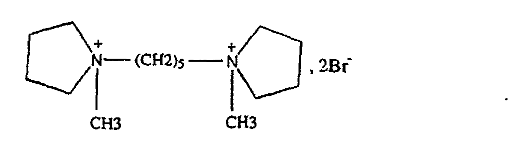

On verse 38 g d'eau dans un mélange solide contenant 3,6 g de silice Aérosil 130, 4,08 g de PentPyrr et 0,144 g de germes de zeolite NU-88 calcinée (obtenu par broyage d'un échantillon d'une synthèse précédente). On agite jusqu'à obtention d'un mélange homogène puis on ajoute, toujours sous agitation une solution obtenue par dissolution de 0,32 g d'aluminate de sodium Carlo Erba (54% Al₂O₃, 37% Na₂0), et 1,22 g de soude (NaOH) dans 20 g d'eau. Ce gel est agité 15 minutes avant d'être transféré dans un autoclave muni d'une gaine en PTFE (polytetrafluoroéthylène).

La composition molaire du gel correspond à :

60 SiO₂, 1,70 Al₂O₃, 18 Na₂0, 10 PentPyrr, 3000 H₂O.

L'autoclave est chauffé pendant 8 jours à 170°C dans une étuve dans des conditions statiques. Après filtration, lavage H₂0 et séchage à 60°C, on obtient 2,95 g de produit.

L'analyse du Si, Al et Na dans le produit a été effectuée par spectroscopie d'émission atomique. On a trouvé la composition atomique suivante :

100SiO₂ : 4,0 Al₂O₃ : 0,144Na₂O

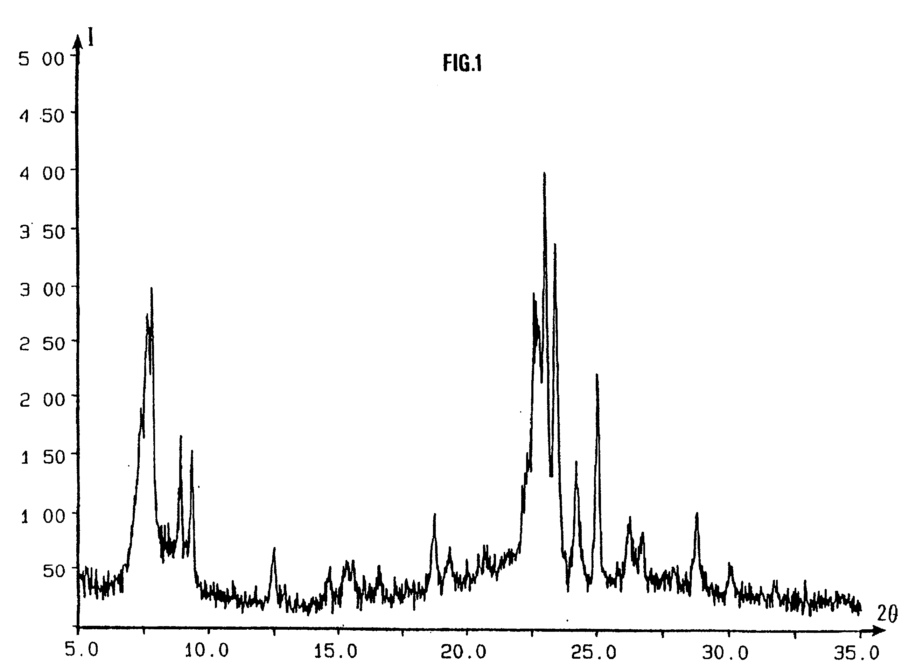

Le produit solide séché a été analysé par diffraction X de poudres et identifié comme étant constitué de zéolithe IM-5, le diagramme obtenu est conforme aux résultats présentés au tableau 1. Le diffractogramme est donné dans la figure 1 [en ordonnée l'intensité l (unité arbitraire) et en abscisse 2 θ (Cu K alpha)].

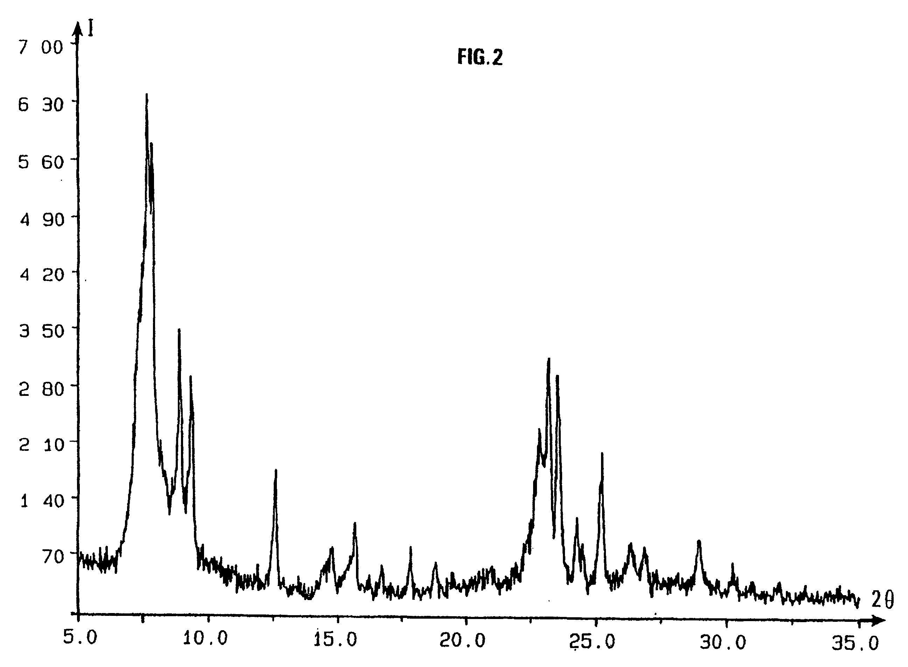

La surface spécifique du produit IM-5 a été déterminée après calcination à 550°C sous air sec durant 4 heures, et est trouvée égale à 530 m2/g. Le produit H-IM5 obtenu a un diffractogramme qui est donné dans la figure 2 [en ordonnée l'intensité I (unité arbitraire) et en abscisse 2 θ (Cu K alpha)].

L'ensemble de l'échantillon de zéolithe IM-5, brute de synthèse, subit tout d'abord une calcination dite sèche à 550°C sous flux d'air sec durant 8 heures. Puis le solide obtenu est soumis à quatre échanges ioniques dans une solution de NH₄NO₃ 10N, à environ 100°C pendant 4 heures pour chaque échange. Le solide ainsi obtenu est référencé NH₄-IM-5/1 et possède un rapport Si/Al = 12,9 et un rapport Na/Al = 0,005.

Puis, la zéolithe NH4-IM-5/1 est malaxée avec de l'alumine de type SB3 fournie par la société Condéa. La pâte malaxée est ensuite extrudée à travers une filière de diamètre 1,4 mm. Les extrudés sont ensuite calcinés à 500°C durant 2 heures sous air puis imprégnés à sec par une solution de chlorure de platine tétramine [Pt(NH₃)₄]Cl₂, et enfin calcinés sous air à 550°C. La teneur en platine du catalyseur final C1 ainsi obtenu est de 0,7 % poids et la teneur en zéolithe exprimée par rapport à l'ensemble de la masse du catalyseur est de 20 % poids.

### Exemple 2 : Préparation du catalyseur C2 conforme à l'invention

La matière première utilisée dans cet exemple est la même zéolithe IM-5 que celle préparée dans l'exemple 1. Elle est de plus soumise à un traitement par une solution d'acide nitrique 5N, à environ 100°C, pendant 7 heures. Le volume V de la solution d'acide nitrique engagé(en ml) est égal à 10 fois le poids P de la zéolithe IM-5 sèche (V/P=10). Ce traitement est réalisé une seconde fois dans les mêmes conditions opératoires.

A l'issue de ces traitements, la zéolithe obtenue et référencée IM-5/2 possède un rapport Si/Al atomique global égal à 38 et un rapport Na/Al atomique inférieur à 0,001.

Puis, la zéolithe IM-5/2 est malaxée avec de l'alumine de type SB3 fournie par la société Condéa. La pâte malaxée est ensuite extrudée à travers une filière de diamètre 1,4 mm. Les extrudés sont ensuite calcinés à 500°C durant 2 heures sous air puis imprégnés à sec par une solution de chlorure de platine tétramine [Pt(NH₃)₄]Cl₂, et enfin calcinés sous air à 550°C. La teneur en platine du catalyseur final C2 ainsi obtenu est de 0,7 % poids et la teneur en zéolithe exprimée par rapport à l'ensemble de la masse du catalyseur est de 20 % poids.

### Exemple 3 : Evaluation des catalyseurs C1 et C2 sur un résidu d'hydrocraquage

Les catalyseurs C1 et C2 ont été évalués pour traiter un résidu d'hydrocraquage issu d'un distillat sous vide.

Les caractéristiques de cette charge sont les suivantes :

| | |
|---|---|
| Teneur en soufre (ppm poids) | 10 |
| Teneur en azote (ppm poids) | 1 |
| Point d'écoulement (°C) | + 40 |
| Point initial | 281 |
| 10% | 345 |
| 50% | 412 |
| 90% | 470 |
| Point final | 543 |

Les catalyseurs C1 et C2 dont la préparation est décrite respectivement dans les exemples 1 et 2 est utilisé pour préparer une huile de base à partir de la charge décrite ci-dessus.

Le catalyseur est préalablement réduit sous hydrogène à 450°C avant le test catalytique in situ dans le réacteur. Cette réduction s'effectue par paliers. Elle consiste en un palier à 150°C de 2 heures, puis une montée en température jusqu'à 450°C à la vitesse de 1°C/min, puis un palier de 2 heures à 450°C. Durant ce protocole de réduction, le débit d'hydrogène est de 1000 litres d'H₂ par litre de catalyseur.

Dans le cas du catalyseur C1, la réaction a lieu à 275°C, sous une pression totale de 12 MPa, une vitesse volumique horaire 1 h⁻¹ et un débit d'hydrogène de 1000 litres d'H₂ par litre de charge. Dans le cas du catalyseur C2, la réaction a lieu à 285°C, les autres conditions opératoires étant par ailleurs identiques à celles utilisées pour tester le catalyseur C1.

Les caractéristiques de l'huile obtenue sont reportées dans le tableau ci-après.

| | Catalyseur C1 | Catalyseur C2 |
|---|---|---|
| Indice de Viscosité VI | ***121*** | ***126*** |
| Point d'écoulement | ***-11°C*** | ***-13°C*** |
| Rendement Huile (% poids) | ***71*** | ***74*** |

Ces exemples montrent tout l'intérêt à utiliser des catalyseurs selon l'invention, qui permettent d'abaisser le point d'écoulement de la charge initiale, dans ce cas un résidu d'hydrocraquage, tout en conservant un haut indice de viscosité (VI).

## Revendications

1. Procédé pour l'amélioration du point d'écoulement d'une charge comportant des paraffines de plus de 10 atomes de carbone, dans lequel la charge à traiter est mise au contact d'un catalyseur à base de zéolithe IM-5 et au moins un élément hydro-déshydrogénant, à une température comprise entre 170 et 500°C, une pression entre 1 et 250 bar et une vitesse volumique horaire entre 0,05 et 100 h⁻¹, en présence d'hydrogène à raison de 50 à 2000 l/l de charge.

2. Procédé selon la revendication 1, dans lequel l'élément hydro-déshyrogénant appartient au groupe VIII.

3. Procédé selon la revendication 1, dans lequel l'élément hydro-déshyrogénant est une combinaison d'au moins un métal ou un composé du groupe VI et d'au moins un métal ou un composé du groupe VIII.

4. Procédé selon la revendication 3, dans lequel le métal ou composé du groupe VIII est choisi parmi le nickel et/ou le cobalt.

5. Procédé selon l'une des revendications précédentes, dans lequel le catalyseur contient du phosphore, dont la teneur, exprimée en oxyde de phosphore P₂O₅ par rapport au support, est inférieure à 15 % poids.

6. Procédé selon l'une des revendications précédentes, dans lequel la zéolite IM-5 présente un rapport Si/T atomique compris entre 5 et 600, T étant choisi dans le groupe formé par Al, Fe, Ga, B, Ti, Zr.

7. Procédé selon l'une des revendications précédentes, dans lequel une partie au moins d'élément T de la zéolite de synthèse a été ôtée, T étant choisi dans le groupe formé par Al, Fe, Ga, B, Ti, Zr.

8. Procédé selon l'une des revendications précédentes, dans lequel la zéolite a été désaluminée.

9. Procédé selon l'une des revendications précédentes, dans lequel la charge a un point d'ébullition initial supérieur à 175°C.

10. Procédé selon l'une des revendications précédentes, dans lequel la charge a un point d'ébullition initial d'au moins 280°C.

11. Procédé selon l'une des revendications précédentes, dans lequel la charge a un point d'ébullition initial d'au moins 380°C.

12. Procédé selon l'une des revendications précédentes, dans lequel la charge contient des paraffines ayant de 15 à 50 atomes de carbone.

13. Procédé selon l'une des revendications précédentes, dans lequel la charge contient des paraffines ayant de 15 à 40 atomes de carbone.

14. Procédé selon l'une des revendications précédentes, dans lequel le composé à traiter est présent dans une charge hydrocarbonée choisie dans le groupe formé par les distillats moyens, les gazoles, les résidus sous vide, les résidus d'hydrocraquage, les paraffines issues du procédé Fischer-Tropsch, les huiles de synthèse, les coupes gasoils et distillats moyens issues du FCC, les huiles, les polyalphaoléfines, les cires.

15. Procédé selon l'une des revendications précédentes, dans lequel la teneur en zéolithe dans le catalyseur est comprise entre 0,5 et 99,9% poids.

16. Procédé selon l'une des revendications précédentes, dans lequel le catalyseur contient au moins une matrice choisie parmi les éléments du groupe formé par les argiles, la magnésie, l'alumine, la silice, l'oxyde de titane, l'oxyde de bore, la zircone, les phosphates d'aluminium, les phosphates de titane, les phosphates de zirconium et les silices-alumines et le charbon.

## Claims

1. Process for improving the pour point of a feedstock that comprises paraffins with more than 10 carbon atoms, in which the feedstock that is to be treated is contacted with a catalyst with an IM-5 zeolite base and at least one hydro-dehydrogenating element, at a temperature of between 170 and 500°C, a pressure of between 1 and 250 bar, and an hourly volume velocity of between 0.05 to 100 h⁻¹, in the presence of hydrogen at a ratio of 50 to 2000 I/I of feedstock.

2. Process according to claim 1, wherein the hydro-dehydrogenating element belongs to group VIII.

3. Process according to claim 1, wherein the hydro-dehydrogenating element is a combination of at least one metal or a compound of group VI and at least one metal or a compound of group VIII.

4. Process according to claim 3, wherein the metal or compound of group VIII is selected from nickel and/or cobalt.

5. Process according to one of the preceding claims, wherein the catalyst contains phosphorus in an amount lower than 15% wt, expressed in phosphorus oxide P₂O₅ relating to the support.

6. Process according to one of the preceding claims, wherein the IM-5 zeolite has an atomic Si/T ratio of between 5 and 600, whereby T is selected from the group that is formed by Al, Fe, Ga, B, Ti, Zr.

7. Process according to one of the preceding claims, wherein at least a portion of element T of the synthesis zeolite has been removed, whereby T is selected in the group that is formed by Al, Fe, Ga, B, Ti, Zr.

8. Process according to one of the preceding claims, wherein the zeolite has been dealuminated.

9. Process according to one of the preceding claims, wherein the feedstock has a starting boiling point that is greater than 175°C.

10. Process according to one of the preceding claims, wherein the feedstock has a starting boiling point of at least 280°C.

11. Process according to one of the preceding claims, wherein the feedstock has a starting boiling point of at least 380°C.

12. Process according to one of the preceding claims, wherein the feedstock contains paraffins that have 15 to 50 carbon atoms.

13. Process according to one of the preceding claims, wherein the feedstock contains paraffins that have 15 to 40 carbon atoms.

14. Process according to one of the preceding claims, wherein the compound that is to be treated is present in a feedstock that contains hydrocarbon which is selected from the group that is formed by the middle distillates, gas-oils, the residues under vacuum, hydrocracking residues, the paraffins that come from the Fischer-Tropsch process, synthesis oils, the gas-oil fractions and middle distillates that come from FCC, oils, polyalphaolefins, and waxes.

15. Process according to one of the preceding claims, wherein the zeolite content in the catalyst is between 0.5 and 99.9% by weight.

16. Process according to one of the preceding claims, wherein the catalyst contains at least one matrix that is selected from among the elements of the group that is formed by the clays, magnesia, alumina, silica, titanium oxide, boron oxide, zirconia, aluminum phosphates, titanium phosphates, zirconium phosphates and silica-aluminas and carbon.

## Patentansprüche

1. Verfahren zur Verbesserung des Stockpunktes einer Beschickung umfassend Paraffine mit mehr als 10 Kohlenstoffatomen, bei dem die zu behandelnde Beschickung in Kontakt gebracht wird mit einem Katalysator auf der Basis von Zeolith IM-5, und zumindest einem hydrierend/dehydrierenden Element, bei einer Temperatur zwischen 170 und 500°C, einem Druck zwischen 1 und 250 bar und einer stündlichen Volumengeschwindigkeit zwischen 0.05 und 100 h⁻¹ in Gegenwart von Wasserstoff mit einem Verhältnis zwischen 50 und 2000 I/I der Beschickung.

2. Verfahren nach Anspruch 1, bei dem das hydrierende/dehydrierende Element der Gruppe VIII angehört.

3. Verfahren nach Anspruch 1, bei dem das hydrierende/dehydrierende Element eine Kombination ist, aus mindestens einem Metall oder einer Verbindung aus der Gruppe VI, und aus mindestens einem Metall oder einer Verbindung aus der Gruppe VIII.

4. Verfahren nach Anspruch 3, bei dem das Metall oder die Verbindung der Gruppe VIII ausgewählt ist zwischen Nickel und/oder Kobalt.

5. Verfahren nach einem der vorherigen Ansprüche, bei dem der Katalysator Phosphor enthält, dessen Gehalt, ausgedrückt als Phosphoroxid P₂O₅ im Verhältnis zu einem Träger, weniger als 15 Gewichtsprozent ist.

6. Verfahren nach einem der vorherigen Ansprüche, bei dem das Zeolith IM-5 ein Si/T Atomverhältnis zwischen 5 und 600 aufweist, wobei T ausgewählt ist aus der Gruppe gebildet durch Al, Fe, Ga, B, Ti, Zr.

7. Verfahren nach einem der vorherigen Ansprüche, bei dem ein Teil wenigstens eines Elements T des Synthese-Zeolithen weggelassen wurde, wobei T ausgewählt wurde aus der Gruppe gebildet durch Al, Fe, Ga, B, Ti, Zr.

8. Verfahren nach einem der vorherigen Ansprüche, bei dem der Zeolith entaluminisiert wurde.

9. Verfahren nach einem der vorherigen Ansprüche, bei dem die Beschickung einen Anfangssiedepunkt von mehr als 175°C hat.

10. Verfahren nach einem der vorherigen Ansprüche, bei dem die Beschickung einen Anfangssiedepunkt von mindestens 280°C hat.

11. Verfahren nach einem der vorherigen Ansprüche, bei dem die Beschickung einen Anfangssiedepunkt von mindestens 380°C hat.

12. Verfahren nach einem der vorherigen Ansprüche, bei dem die Beschickung Paraffine mit 15 bis 50 Kohlenstoffatomen enthält.

13. Verfahren nach einem der vorherigen Ansprüche, bei dem die Beschickung Paraffine mit 15 bis 40 Kohlenstoffatomen enthält.

14. Verfahren nach einem der vorherigen Ansprüche, bei dem die zu behandelnde Verbindung vorliegt in einer kohlenwasserstoffhaltigen Beschickung, die aus der Gruppe gewählt ist, die gebildet wird durch die Mitteldestillate, die Gasöle, die Vakuumrückstände, die Hydrocracking-Rückstände, die durch das Fischer-Tropsch Verfahren gebildeten Paraffine, die Syntheseöle, die Schnitte der Gasöle und Mitteldestillate gebildet durch FCC, die Öle, die Poyalphaolefine, die Wachse.

15. Verfahren nach einem der vorherigen Ansprüche, bei dem der Zeolithgehalt im Katalysator zwischen einschließlich 0.5 und 99.9 Gewichtsprozent liegt.

16. Verfahren nach einem der vorherigen Ansprüche, bei dem der Katalysator mindestens eine Matrix enthält, ausgewählt unter den Elementen der Gruppe, die gebildet wird durch die Tone, Magnesiumoxid, Aluminiumoxid, Siliziumoxid, Titanoxid, Boroxid, Zirkoniumoxid, Aluminiumphosphat, Titanphosphat, Zirkoniumphosphat und kieselsaurer Tonerde und Kohle.
